# DEMANDE DE BREVET EUROPEEN

(11) **EP 0 725 291 A1**
(43) Date de publication de la demande: **07.08.1996**
(21) Numéro de dépôt: 96101400.8
(22) Date de dépôt: 01.02.1996
(51) Int. Cl.: G02B 6/44, G02B 6/38

(54) **Dispositif d'extrémité pour câble optique**

(30) Priorité: 02.02.1995 FR 9501353
(71) Demandeur: CORTAILLOD COSSONAY CABLE S.A., 2016 Cortaillod (CH)
(72) Inventeur: Delacretaz, Blaise, CH-2003 Neuchatel (CH); Urfer, Patrick, CH-2016 Cortaillod (CH)
(74) Mandataire: Nithardt, Roland

(57) **Abrégé**

Le dispositif d'extrémité pour câble optique est monté sur un câble comprenant des fibres optiques (14) placées dans un tube (13) autour duquel est disposé une couche d'éléments de traction (15) prise en sandwich entre deux couches d'éléments d'étanchéité longitudinale (16, 17). Il comporte un embout (18) prolongé par une tête d'ancrage (19) disposée autour dudit tube (13). Une douille de sertissage (21) liée à une bague filetée (22) est vissée sur la tête d'ancrage, puis la douille (21) est sertie sur la gaine du câble de façon à avoir une section polygonale. La bague (22) comporte un évidement annulaire intérieur (23) pourvu d'une ouverture (24) conçue pour permettre l'injection d'une colle qui se répand dans les fibres de verre pour constituer un ancrage efficace entre le câble et le dispositif d'extrémité.

## Description

La présente invention concerne un dispositif d'extrémité pour câble optique comprenant plusieurs fibres optiques, des éléments de traction et des éléments d'étanchéité, ces éléments de traction comportant au moins une nappe de fibres de verre imprégnées d'une colle qui conserve une consistance molle, et les éléments d'étanchéité étant constitués d'au moins deux couches de fibres textes, ce dispositif comportant des moyens pour fixer lesdits éléments de traction et lesdits éléments d'étanchéité longitudinaux, un organe répartiteur pour séparer les fibres et les positionner autour d'une surface cylindrique, et des éléments tubulaires de protection des fibres individuelles dans lesquels sont engagés les tronçons d'extrémité de chacune des fibres du câble, dispositif dans lequel les moyens pour fixer lesdits éléments de traction et lesdits éléments d'étanchéité longitudinaux comportent un tube et au moins une douille de sertissage agencée pour s'adapter sur l'armature préalablement engagée sur ledit tube.

On connaît déjà des dispositifs d'extrémité de ce type, décrits notamment dans la demande de brevet publiée sous le numéro EP-A-0520 946. Etant donné que la construction des câbles optiques a évolué, ces dispositifs ne sont plus adaptés à cette nouvelle construction qui est à la fois plus économique et plus performante. En effet, dans les câbles actuels, les éléments de traction classiques ont été remplacés par des fibres de verre disposées sous forme de nappes préformées revêtues d'une colle qui conserve une consistance molle. En outre les éléments de traction sont pris en sandwich entre au moins deux couches d'étanchéité constituées par des fibres absorbantes et gonflant à l'humidité. Ces éléments n'offrent pas une prise efficace aux bagues serties utilisées dans l'art antérieur pour tenir l'extrémité du câble.

La demande de brevet européen publiée sous le No EP-A- 0 434 212 décrit un connecteur pour filtre optique, et plus particulièrement un procédé pour fixer des éléments de traction d'un câble ne contenant qu'une seule fibre optique. Le câble est dénudé sur une certaine longueur proche des extrémités de façon à laisser dépasser des éléments de traction. Ces éléments sont noyés dans un adhésif thermoplastique, ce qui permet de n'exercer qu'une faible traction sur le câble.

La publication No EP-A- 0 467 156 décrit un autre connecteur pour fibre optique. Le câble décrit dans ce document ne comporte également qu'une seule fibre optique et une nappe d'éléments de traction disposés autour de la fibre. Ces éléments de traction sont pincés entre deux éléments comportant respectivement un filetage intérieur et un filetage extérieur, d'où un risque élevé de cisaillement de la fibre réduit par des nervures.

Les dispositifs objets de ces deux dernières publications ne sont pas des dispositifs pour l'éclatement des fiches en faisceau à l'extrémité d'un câble à tube central.

La publication allemande No DE-A-38 20 950 décrit un dispositif d'extrémité pour câble à fibre optique formé d'un manchon d'extrémité dans lequel une masse de remplissage est injectée. Cette masse enrobe tous les éléments du câble, et notamment les éléments de traction et la fibre optique. L'enrobage de la fibre optique peut provoquer des pertes de transmission et des ruptures à cause du retrait de la masse de remplissage. D'autre part, la pénétration par capillarité dans le câble de la masse de remplissage, le long des éléments de traction, rend le câble très rigide sur une certaine longueur.

Le dispositif d'extrémité tel que défini en préambule pallie tous ces inconvénients, en particulier permet d'utiliser des éléments de traction enrobés, et est caractérisé en ce que ladite douille de sertissage est pourvue d'un évidement annulaire intérieur agencé pour recevoir une résine polymérisable qui imprègne et se lie auxdits éléments de traction pour constituer des moyens d'accouplement entre ladite douille de sertissage et lesdits éléments de traction.

Selon une forme de réalisation préférée, l'évidement annulaire intérieur présente la forme d'un canal annulaire ménagé le long de la paroi intérieure de la douille de sertissage.

La douille de sertissage comporte avantageusement un filetage intérieur agencé pour coopérer avec un filetage extérieur d'une tête d'ancrage solidaire d'un embout.

Le filetage de la tête d'ancrage s étend de préférence sur toute sa longueur et est agencé pour provoquer une déchirure de la nappe de fibres de verre imprégnées qui constituent les éléments de traction.

La présente invention et ses avantages apparaîtront mieux dans la description suivante d'un exemple de réalisation et en référence aux dessins annexés, dans lesquels:
- la figure 1 est une vue en coupe du dispositif selon la présente invention;
- la figure 2 est une vue en coupe agrandie d'une partie du dispositif d'extrémité de la figure 1;
- la figure 3 est une vue partiellement en coupe du dispositif de la figure 1;
- la figure 4 illustre une application du dispositif d'extrémité selon la présente invention;
- la figure 5 est une vue en coupe selon la ligne A-A de la figure 1 et,
- la figure 6 illustre une variante d'application du dispositif d'extrémité selon la présente invention.

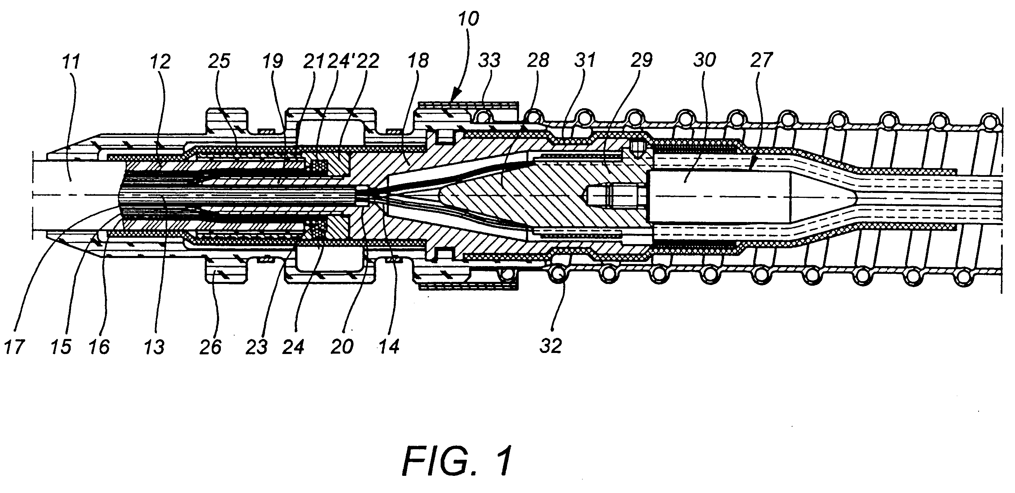

En référence à la figure 1, le dispositif d'extrémité 10 pour câble optique tel que représenté est conçu pour assurer une protection optimale des fibres optiques d'un câble, notamment pour augmenter la sécurité lorsque l'on exerce une force de traction sur ce câble, ceci en réalisant un ensemble rigide avec la gaine extérieure du câble.

A cet effet, le dispositif est adapté à une extrémité d'un câble optique 11. Ce câble se compose principalement d'une gaine extérieure 12, d'un tube 13 contenant des fibres optiques 14, d'une couche d'éléments de traction 15 et de deux couches d'éléments d'étanchéité longitudinaux 16 et 17. La couche d'éléments de traction 15 est prise en sandwich entre les deux couches d'éléments d'étanchéité longitudinaux 16 et 17 et l'ensemble formé par ces trois couches 15, 16 et 17 est disposé entre le tube 13 et la gaine extérieure 12, coaxialement à ces derniers. Les éléments d'étanchéité sont constitués par des fibres textiles et les éléments de traction sont constitués par des fibres de verre enduites d'une colle qui conserve une consistance molle. Etant donné que les fibres de verre sont cassantes, peu élastiques et glissantes, il n'est pas possible de sertir directement le dispositif d'extrémité sur ces dernières. En revanche, elles se prêtent bien au collage. L'objectif est d'assurer une retenue optimale du dispositif d'extrémité aux fibres de verre qui constituent les éléments de traction et à la gaine extérieure. Cet objectif est atteint par la conception de ce dispositif qui comporte principalement un embout 18 qui se prolonge par une tête d'ancrage 19 pourvue d'un alésage central 20 dont le diamètre est sensiblement égal au diamètre du tube 13. Cette tête d'ancrage se termine en pointe autour dudit tube et son diamètre extérieur est égal ou légèrement supérieur au diamètre de la couche d'éléments de traction 15. La tête d'ancrage est logée entre le tube 13 et la couche intérieure d'éléments d'étanchéité 17 sur une certaine longueur, dite tronçon d'extrémité du câble 11.

Autour de la tête d'ancrage 19 est disposée une douille de sertissage 21 qui se prolonge vers l'extrémité du tronçon d'extrémité du câble (vers la droite sur la figure) par une bague 22 filetée intérieurement, qui se visse sur la tête d'ancrage, filetée extérieurement. La douille de sertissage 21 est sertie sur la gaine extérieure. Cette opération lui donne une section polygonale, par exemple hexagonale.

La bague 22 comporte un évidement annulaire intérieur 23 qui est en contact avec les éléments de traction 15. Cet évidement annulaire comporte une ouverture 24 vers l'extérieur de la bague 22. Cette ouverture est conçue pour permettre l'injection d'une colle au moyen d'une seringue. Cette colle est de préférence une résine polymérisable, telle qu'une résine époxy très liquide, qui pénètre bien dans l'évidement annulaire et qui se répand dans les fibres de verre pour constituer des moyens d'accouplement 24' entre la douille de sertissage 21 et les éléments de traction 15, assurant ainsi un ancrage efficace après durcissement de cette résine.

Après cette opération, on met en place un tube d'habillage 25 qui empêche la colle de ressortir de l'évidement. De cette manière, la colle assure le blocage de la douille de sertissage et de l'embout 18. Cet ensemble est protégé par une coquille 26 moulée en matière synthétique constituée de deux demi-coques emboîtées. Le tube d'habillage 25 d'une part et la tête d'ancrage 19 d'autre part empêchent la résine d'atteindre les fibres optiques, ce qui entraînerait leur détérioration.

Le dispositif d'extrémité 10 comporte en outre un organe répartiteur 27 logé à l'intérieur de l'embout 18 et composé d'un premier tronçon 28 sensiblement conique dont la base est solidaire d'un deuxième tronçon 29 cylindrique couplé à un troisième tronçon 30 au moins partiellement cylindrique ayant un diamètre inférieur à celui du tronçon cylindrique précédent.

Cet organe répartiteur permet de disposer les fibres optiques individuelles 14 de telle façon que chacune d'elles soit accessible facilement en vue d'une connexion ultérieure. L'organe répartiteur est recouvert par une gaine protectrice 31 et un tube de protection flexible 32 lié à la coquille 26 de façon à assurer une protection des extrémités des fibres optiques contre des contraintes mécaniques qui peuvent survenir lors de la pose du câble.

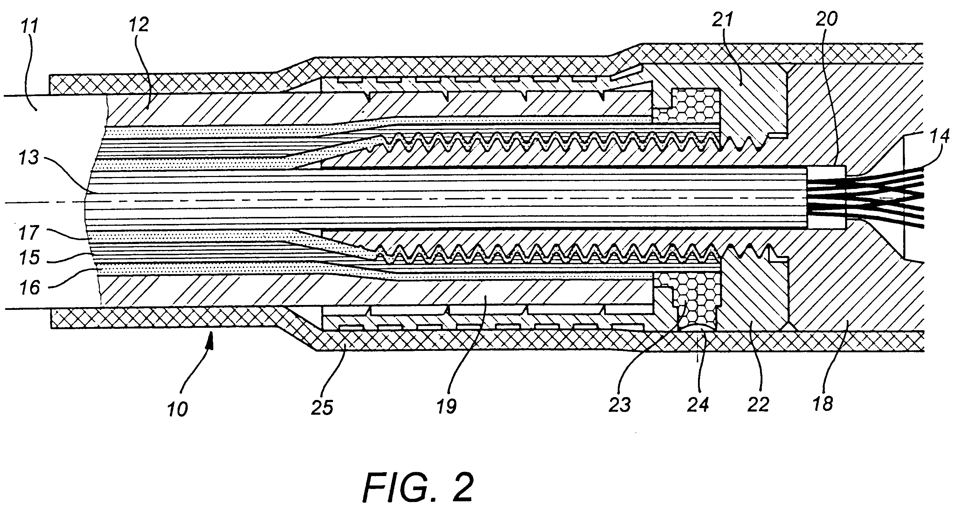

La figure 2 est une vue agrandie du dispositif d'extrémité 10 de la figure 1. On voit notamment le filetage de la tête d'ancrage 19. Ce filetage a pour effet de provoquer une déchirure de l'enveloppe qui entoure les mèches de fibres de verre imprégnées qui constituent les éléments de traction 15 et de permettre la liaison colle-fibres au travers des fibres textiles constituant les éléments d'étanchéité. Ces fibres textiles sont absorbantes et sont des éléments gonflant à l'humidité.

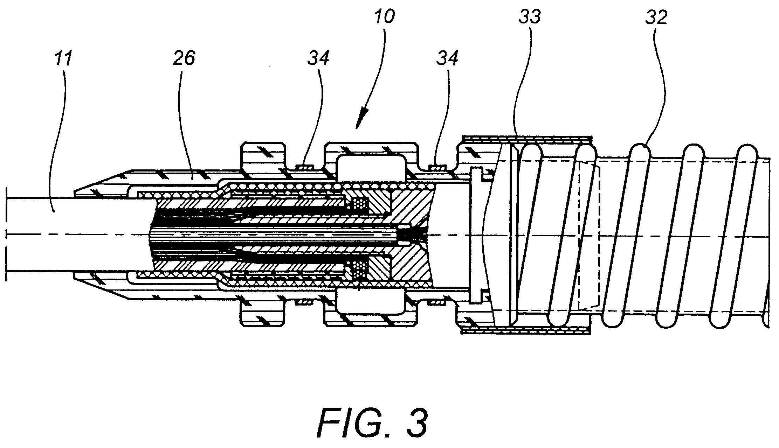

La figure 3 est une vue en coupe partielle du dispositif d'extrémité 10 de la figure 1. Dans cette figure, le tube de protection flexible 32 est représenté tel qu'il est maintenu sur le dispositif d'extrémité au moyen d'un enroulement de ruban adhésif 33 recouvrant partiellement la coquille 26 et le tube flexible 32. Les deux coques formant cette coquille 26 sont maintenues en place pendant leur assemblage, par deux brides de serrage 34.

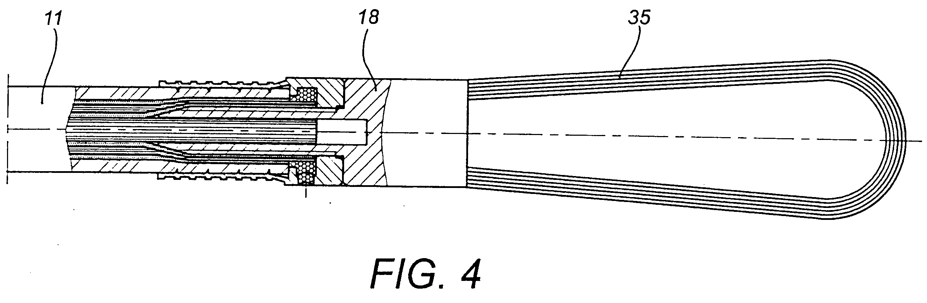

La figure 4 illustre une application du dispositif d'extrémité selon la présente invention. Dans cette application, l'embout 18 est couplé à une boucle de tirage 35 utilisée pour y fixer un câble de tirage lors de la mise en place du câble optique.

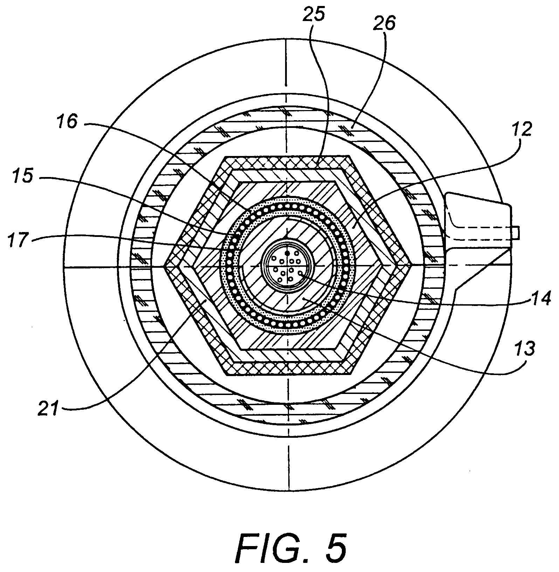

La figure 5 est une vue en coupe selon la ligne A-A de la figure 1. Dans cette figure, on voit en particulier la forme hexagonale de la douille de sertissage 21, cette forme étant obtenue en déformant, au moyen d'une pince de sertissage appropriée, un élément de section initiale circulaire. La section polygonale de la douille empêche la rotation des différents éléments du dispositif d'extrémité les uns par rapport aux autres.

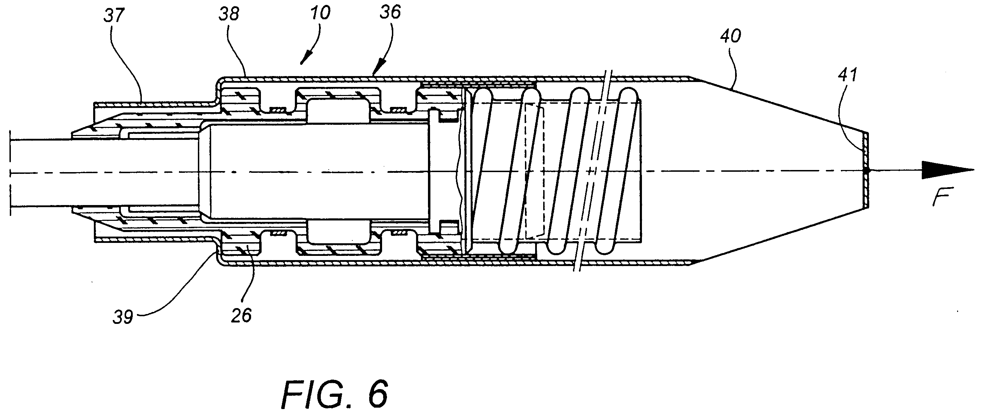

La figure 6 est une vue en coupe illustrant le dispositif 10 coopérant avec un organe de tirage 36 utilisé pour la mise en place du câble. Cet organe de tirage comporte une première zone tubulaire 37 ayant un premier diamètre et une deuxième zone tubulaire 38 ayant un deuxième diamètre supérieur audit premier diamètre. Ces deux zones tubulaires sont liées par un anneau 39 qui prend appui contre la coquille 26. La deuxième zone tubulaire 37 est liée à une zone conique 40 terminée par un disque 41 sur lequel est appliquée la force de tirage désignée par F.

Un aspect particulièrement important de l'invention concerne l'agencement de la tête d'ancrage 19, des éléments de traction 15, de l'évidement annulaire 23 et de l'orifice 24. En effet, la disposition de ces différents éléments empêche tout contact entre la résine et les fibres optiques, ce qui, si tel n'était pas le cas, risquerait de détériorer les fibres optiques, et ce qui n'est pas réalisé par les dispositifs de l'art antérieur.

## Revendications

1. Dispositif d'extrémité pour câble optique comprenant plusieurs fibres optiques, des éléments de traction et des éléments d'étanchéité, ces éléments de traction comportant au moins une nappe de fibres de verre imprégnées d'une colle qui conserve une consistance molle, et les éléments d'étanchéité étant constitués d'au moins deux couches de fibres textiles, ce dispositif comportant des moyens pour fixer lesdits éléments de traction et lesdits éléments d'étanchéité longitudinaux, un organe répartiteur pour séparer les fibres et les positionner autour d'une surface cylindrique, et des éléments tubulaires de protection des fibres individuelles dans lesquels sont engagés les tronçons d'extrémité de chacune des fibres du câble, dispositif dans lequel les moyens pour fixer lesdits éléments de traction et lesdits éléments d'étanchéité longitudinaux comportent un tube et au moins une douille de sertissage agencée pour s'adapter sur l'armature préalablement engagée sur ledit tube, caractérisé en ce que ladite douille de sertissage (21) est pourvue d'un évidement annulaire intérieur (23) agencé pour recevoir une résine polymérisable qui imprègne et se lie auxdits éléments de traction (15) pour constituer des moyens d'accouplement (24') entre ladite douille de sertissage et lesdits éléments de traction.

2. Dispositif selon la revendication 1, caractérisé en ce que l'évidement annulaire intérieur (23) présente la forme d'un canal annulaire ménagé le long de la paroi intérieure de la douille de sertissage (21).

3. Dispositif selon la revendication 2, caractérisé en ce que la douille de sertissage (21) comporte un filetage intérieur agencé pour coopérer avec un filetage extérieur d'une tête d'ancrage (19) solidaire d'un embout (18).

4. Dispositif selon la revendication 3, caractérisé en ce que le filetage de la tête d'ancrage (19) s'étend sur toute sa longueur et est agencé pour provoquer une déchirure de la nappe de fibre de verre imprégnées qui constitue les éléments de traction (15).
